# EUROPÄISCHE PATENTSCHRIFT

(11) **EP 3 288 798 B1**
(45) Veröffentlichungstag und Bekanntmachung des Hinweises auf die Patenterteilung: **06.02.2019**
(21) Anmeldenummer: 16707711.4
(22) Anmeldetag: 01.03.2016
(51) Int. Cl.: B60R 7/04, B60N 3/08

(54) **ABLAGEFACH FÜR EINE FAHRZEUG-INNENVERKLEIDUNG**
STORAGE COMPARTMENT FOR A VEHICLE INNER PANEL
COMPARTIMENT DE RANGEMENT POUR GARNITURE INTÉRIEURE DE VÉHICULE

(30) Priorität: 27.04.2015 DE 102015207699
(43) Veröffentlichungstag der Anmeldung: 07.03.2018
(73) Patentinhaber: Volkswagen Aktiengesellschaft, 38440 Wolfsburg (DE)
(72) Erfinder: REHLING, Peter, 38518 Gifhorn (DE)
(86) Internationale Anmeldenummer: PCT/EP2016/054304
(87) Internationale Veröffentlichungsnummer: WO 2016/173745

(56) Entgegenhaltungen:
- EP-A1- 1 065 103
- DE-A1-102008 058 107
- US-A1- 2009 179 449

## Beschreibung

Die Erfindung betrifft ein Ablagefach für eine Fahrzeug-Innenverkleidung nach dem Oberbegriff des Patentanspruches 1.

Für die Ablage von Münzen, Geldkarten oder anderen Kleinteilen können im unmittelbaren Griffbereich des Fahrzeuginsassen an einer Fahrzeug-Innenverkleidung, zum Beispiel an einer Cupholder-Vorrichtung oder an der Mittelkonsole oder an der Instrumententafel, tiefe schmale Ablagemöglichkeiten vorgesehen sein.

Aus der DE 10 2008 033 112 A1 ist ein Ablagefach bekannt, das einen von einer Zugangsöffnung um einen Höhenversatz nach unten versetzten Ablagefach-Boden aufweist, der in eine davon hochgezogene Seitenwandung übergeht. Der Ablagefach-Boden ist mit einer aus einem Elastomermaterial gebildeten Einlegematte ausgekleidet, die eine Auflagefläche für die Kleinteile bildet. Bei dem aus der DE 10 2008 033 112 A1 bekannten Ablagefach ist die Einlegematte vollflächig in Anlage mit dem Ablagefach-Boden und ist die Auflagefläche eben ausgebildet.

Die DE 10 2008 058 107 A1 zeigt eine verschwenkbare Armlehne für Fahrzeuge mit einem Trinkgefäßhalter. In der EP 1 065 103 A1 ist eine Vorrichtung zur Verwendung als Ablage- bzw. Aufnahmefach von Gegenständen in Kraftfahrzeugen beschrieben. Die US 2009/179449 A1 offenbart eine Ablagebox für Fahrzeuge mit einem integrierten Lüftungskanal.

Speziell bei einem schmal und tief ausgebildeten Ablagefach ist die Entnahme von Münzen oder anderen Kleinteilen nur erschwert unter Komforteinbußen möglich. Mangels ausreichendem Zugriff kann die Münze nur mittels der Fingerspitzen aus dem schmalen, tiefen Ablagefach entnommen werden.

Die Aufgabe der Erfindung besteht darin, ein kostengünstiges Ablagefach für eine Fahrzeug-Innenverkleidung bereitzustellen, bei dem die Entnahme von Kleinteilen auch bei schmaler und tiefer Gestaltung des Ablagefachs ohne Komforteinbußen ermöglicht ist.

Die Aufgabe ist durch die Merkmale des Patentanspruches 1 gelöst. Bevorzugte Weiterbildungen der Erfindung sind in den Unteransprüchen offenbart.

Die Erfindung beruht auf der Beobachtung, dass im Stand der Technik eine flach auf der Auflagefläche des Ablagefaches liegende Münze nur schwierig von den Fingerspitzen des Fahrzeuginsassen untergriffen werden kann, um diese aus einem schmalen und tiefen Ablagefach herauszunehmen. Vor diesem Hintergrund ist gemäß dem kennzeichnenden Teil des Patentanspruches 1 zumindest teilweise eine freie Verformungskammer in der Einlegematte integriert. Diese bewirkt bei einer manuellen Druckbeaufschlagung, zum Beispiel mittels der Fingerspitzen des Fahrzeuginsassen, eine Verformung der Auflagefläche der Einlegematte. Diese wölbt sich in die freie Verformungskammer hinein. Zwischen der somit verformten Auflagefläche und dem im Ablagefach liegenden Kleinteil, zum Beispiel einer flach aufliegenden Münze, wird somit ein für die Fingerspitzen zugänglicher Hinterschnitt gebildet, der ein Untergreifen des Kleinteiles ermöglicht. Auf diese Weise kann speziell bei einem schmalen und tiefen Ablagefach auf kostengünstige Weise eine Entnahme von Kleinteilen komfortabel gestaltet werden.

Die Einlegematte ist bevorzugt bei Druckbeaufschlagung elastisch nachgiebig, das heißt unter Aufbau einer Rückstellkraft, verformbar. Bei Wegfall der Druckbeaufschlagung durch die Fingerspitzen kehrt die Einlegematte unter Abbau der Rückstellkraft wieder selbsttätig in ihren unverformten Zustand zurück. Bevorzugt kann die Einlegematte aus einem Elastomermaterial ausgebildet sein.

In einer Ausführungsvariante kann die freie Verformungskammer im Vollmaterial der Einlegematte integriert sein, das heißt vollständig vom Vollmaterial der Einlegermatte umgrenzt sein. Alternativ dazu kann in einer technisch einfacheren Umsetzung die freie Verformungskammer nicht alleine in der Einlegematte integriert sein, sondern vielmehr zwischen der Einlegematte und dem Ablagefach-Boden ausgebildet sein. Wie oben erwähnt, kann die Einlegematte aus einem Elastomermaterial gefertigt sein, zum Beispiel aus einer elastischen Kunststoff-Weichkomponente. Demgegenüber kann das Ablagefach aus einer Kunststoff-Hartkomponente gebildet sein, und zwar mit einer bevorzugt glattflächigen Innenseite. Bei der Entnahme von zum Beispiel einer Münze kann diese zunächst mittels der Fingerspitzen untergriffen werden und in einer Hochkant-Lage gegen eine Seitenwand des Ablagefaches gedrückt werden. Anschließend kann die Münze mittels der Fingerspitzen entlang der glattflächigen Innenseite des Ablagefaches in Entnahmerichtung nach oben geschoben werden.

Die Einlegematte kann in einer technischen Umsetzung im unverformten Zustand eine in die Entnahmerichtung weisende Aufwölbung aufweisen. Entsprechend ist auch die bereitgestellte Auflagefläche der Einlegematte gewölbt ausgebildet. Die Unterseite der Einlegematte begrenzt demgegenüber zusammen mit dem Ablagefach-Boden die freie Verformungskammer.

Die Einlegematte kann exemplarisch mit einem zumindest bereichsweise auf dem Ablagefach-Boden liegenden Mattenboden realisiert sein, der randseitig in einen umlaufenden Randsteg übergeht. Dieser kann für eine ortsfeste Positionierung der Einlegematte im Ablagefach dem Inneneckbereich (das heißt dem Übergang zwischen dem Ablagefach-Boden und der davon hochgezogenen Seitenwand) des Ablagefaches konturangepasst sein und in formschlüssiger Anlage mit dem Ablagefach-Inneneckbereich sein. In diesem Fall kann zur Bildung der Aufwölbung der Mattenboden beginnend vom umfangsseitigen Randsteg bis zu einer mittigen Scheitelstelle in der Entnahmerichtung nach oben kalottenförmig aufgewölbt sein.

In einer einfachen Ausführungsform kann der Mattenboden der Einlegematte eine durchgängig konstante Materialdicke aufweisen sowie geschlossenflächig ausgeführt sein. Am umfangsseitigen Randsteg kann die Materialdicke bis zu einer Randsteg-Oberkante hin verringert sein.

In einer der obigen Ausführungsformen ist der Mattenboden der Einlegematte im unverformten Zustand in der Entnahmerichtung aufgewölbt, das heißt nicht vollflächig eben ausgebildet. Dies kann gegebenenfalls aus optischen Gründen nachteilig sein. Von daher kann in einer weiteren Ausführungsform der Ablagefach-Boden auch vollflächig eben ausgebildet sein, das heißt mit einer ebenflächigen Auflagefläche für die Kleinteile. In diesem Fall kann der Mattenboden der Einlegematte zur Bildung der freien Verformungskammer eine variierende Materialdicke aufweisen. Auf diese Weise kann die Materialdicke im Mattenboden variiert werden (und zwar auf seiner, dem Ablagefach-Boden zugewandten Unterseite), um eine zum Beispiel taschenförmige Ausnehmung und/oder zusätzliche Stege bereitzustellen.

In der Zusammenbaulage kann die Ablagefläche um einen Höhenversatz von einer bevorzugt schmalen und schlitzförmigen Zugangsöffnung beabstandet sein. Deren Breite kann im Bereich von 25 bis 50 mm, insbesondere in einer Größenordnung von 30 mm liegen. Deren Länge kann dagegen um ein mehrfaches größer sein und in einem Bereich von 60 bis 100 mm, bevorzugt bei etwa 80 mm liegen. Der oben erwähnte Höhenversatz zwischen der Ablagefach-Zugangsöffnung und der bodenseitigen Ablagefläche kann in diesem Fall in einem Bereich von 50 bis 90 mm liegen, bevorzugt bei 70 mm.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1 und 2: jeweils eine Schnittdarstellung in unterschiedlichen Schnittebenen eines ersten Ausführungsbeispiels eines Ablagefaches für eine Fahrzeug-Innenverkleidung;
- Fig. 3: in einer Alleindarstellung eine den Ablagefach-Boden des Ablagefachs der Fig. 1 und 2 auskleidende Einlegematte;
- Fig. 4 bis 6: jeweils Ansichten, die einen Vorgang zur Entnahme einer Münze aus dem Ablagefach der Fig. 1 und 2 veranschaulichen; und
- Fig. 7: ein zweites Ausführungsbeispiel eines Ablagefachs in einer Ansicht entsprechend der Fig. 1.

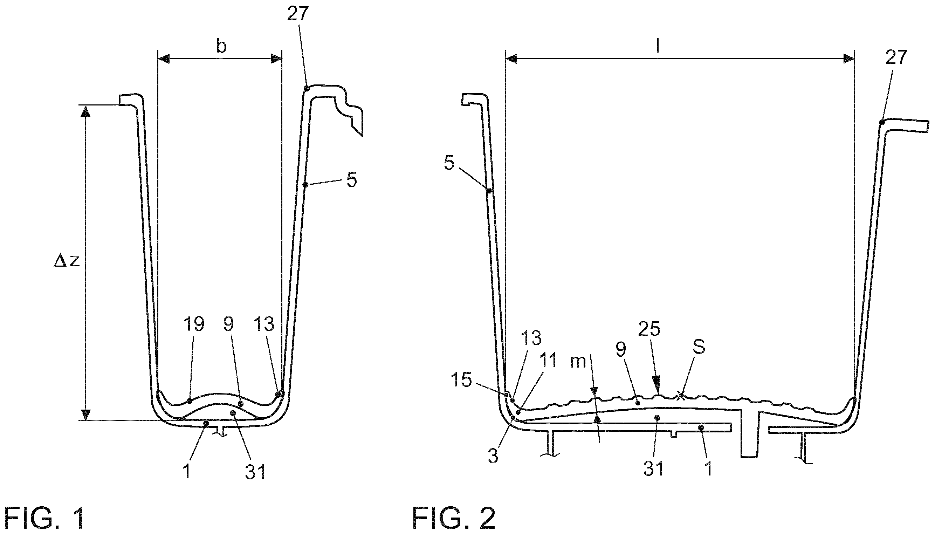

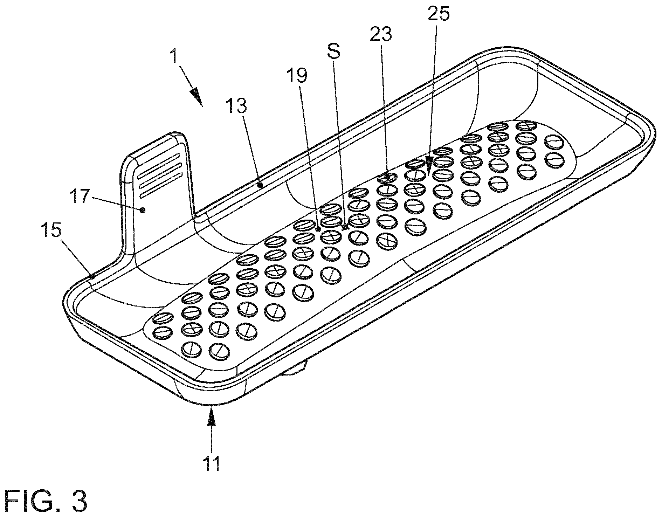

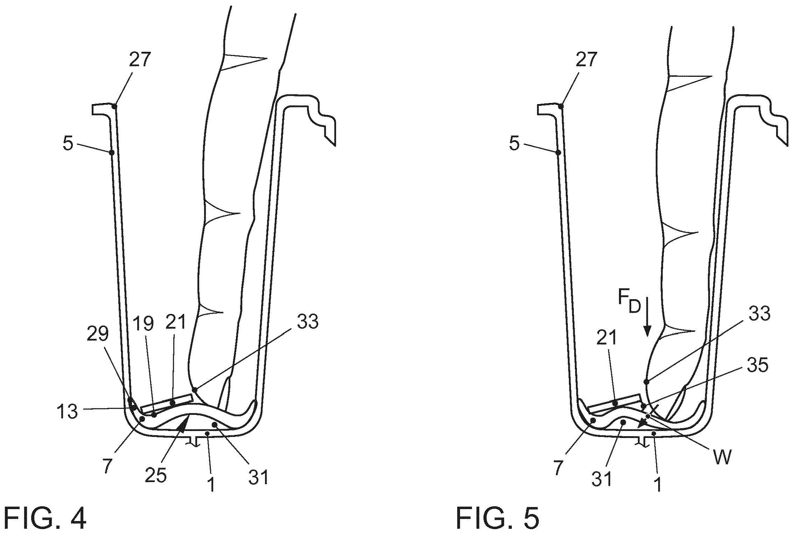

Wie aus den Fig. 1 und 2 hervorgeht, weist das Ablagefach einen Ablagefach-Boden 1 auf, der an einem Inneneckbereich 3 in eine davon hochgezogene umlaufende Seitenwandung 5 übergeht. Der Ablagefach-Boden 1 ist in der Fig. 1 und 2 mit einer gummiartigen Einlegematte 7 ausgekleidet, die exemplarisch aus einem Elastomermaterial hergestellt ist. In der Fig. 3 ist die Einlegematte 7 in perspektivischer Ansicht in Alleindarstellung gezeigt. Demzufolge ist die Einlegematte 7 mit einem Mattenboden 9 ausgebildet, der randseitig unter Bildung eines Außeneckbereiches 11 in einen nach oben hochgezogenen umlaufenden Randsteg 13 übergeht. Gemäß der Fig. 3 ist der Randsteg 13 an seiner Oberkante 15 mit einer Montagelasche 17 nach oben verlängert, mittels derer ein Ausbau der Einlegematte 7 aus dem Ablagefach vereinfacht ist. Die Oberseite des Mattenbodens 9 der Einlegematte 7 bildet die Ablagefach-Auflagefläche 19 zur Auflage von Kleinteilen, etwa einer Münze 21 (Fig. 4 bis 6). Wie aus der Fig. 3 hervorgeht, ist die Auflagefläche 19 mit einer noppenartigen Oberflächenstruktur 23 versehen.

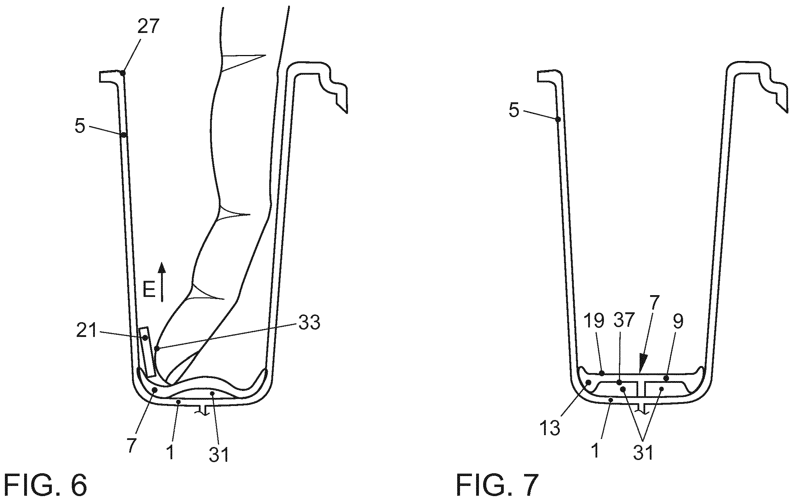

Im unverformten Zustand (Fig. 1 bis 3) sind die Auflagefläche 19 sowie der Mattenboden 9 nicht vollflächig eben ausgebildet, sondern vielmehr mit einer Aufwölbung 25, die in der Entnahmerichtung E (Fig. 6), das heißt in Richtung auf eine obere Zugangsöffnung 27, des Ablagefaches nach oben weist. Die Aufwölbung 25 ist dabei beginnend vom umfangsseitigen Randsteg 13 bis zu mittigen Scheitelstelle S (Fig. 3) kalottenförmig aufgewölbt. Wie aus den Fig. 1 bis 6 weiter hervorgeht, ist der Mattenboden 9 der Einlegematte 7 mit einer durchgängig konstanten Materialdicke m ausgebildet. Im Gegensatz dazu reduziert sich am umlaufenden Randsteg 13 die Materialdicke m bis zu seiner Oberkante 15.

In der Einbaulage untergreift die Oberkante 15 der Einlegematte 7 einen stufenartigen Montageanschlag 29 in der Seitenwandung 5 des Ablagefaches, um eine lagefeste Positionierung der Einlegematte 7 im Ablagefach zu gewährleisten. In der, in den Fig. 1 und 2 sowie 4 bis 6 gezeigten Einbaulage ist der Außeneckbereich 11 der Einlegematte 7 in der Umfangsrichtung durchgängig in formschlüssiger Anlage mit dem Ablagefach-Inneneckbereich 3. Demgegenüber ist zwischen der im Mattenboden 9 gebildeten Aufwölbung 25 und dem ebenflächigen Ablagefach-Boden 1 eine freie Verformungskammer 31 definiert, die als Entnahmehilfe zur Entnahme von Kleinteilen, etwa der in der Fig. 4 gezeigten Münze 21 dient.

Wie aus der Fig. 4 hervorgeht, liegt die Münze 21 im Wesentlichen flach auf der aufgewölbten Auflagefläche 19 auf. Zur Entnahme der Münze 21 drückt der Fahrzeuginsasse mit seinen Fingerspitzen 33 gegen die aufgewölbte Auflagefläche 19. Durch diese Druckbeaufschlagung F_{D} verformt sich der Mattenboden 9 der Einlegematte 7 derart, dass er teilweise in die freie Verformungskammer 31 hinein gewölbt wird. Mit dieser Wölbung W (Fig. 5) in die Verformungskammer 31 hinein ergibt sich zwischen der verformten Auflagefläche 19 und der flach aufliegenden Münze 21 ein für die Fingerspitzen 33 frei zugänglicher Hinterschnitt 35, wodurch die flach aufliegende Münze 21 von den Fingerspitzen 33 untergriffen werden kann und gemäß der Fig. 6 in komfortabler Weise in eine Hochkantlage gegen die glattflächige Seitenwandung 5 des Ablagefaches gedrückt werden kann. Anschließend kann die hochkant aufgestellte Münze 21 in einer Entnahmerichtung E entlang der Seitenwandung 5 nach oben geschoben werden.

Die Einlegematte 7 mit der darin integrierten Aufwölbung 25 ist elastisch nachgiebig ausgelegt, das heißt bei Druckbeaufschlagung F_{D} unter Aufbau einer Rückstellkraft verformbar. Bei Wegfall der Druckbeaufschlagung F_{D} ist die Einlegematte 7 unter Abbau der Rückstellkraft selbsttätig wieder in ihren unverformten Zustand rückstellbar.

Der oben anhand der Fig. 4 bis 6 dargelegte Wirkungsmechanismus ist insbesondere bei einem schmalen sowie tiefen Ablagefach von Bedeutung. Beispielhaft kann die Ablagefläche 19 um einen Höhenversatz Δz, der in einem Bereich von ca. 70 mm liegt, von der schmalen schlitzförmigen Zugangsöffnung 27 beabstandet sein. Die Breite b der Zugangsöffnung kann beispielhaft bei ca. 30 mm liegen, während die Länge l bei ca. 80 mm liegt.

In der Fig. 7 ist ein Ablagefach gemäß einem zweiten Ausführungsbeispiel gezeigt, dessen grundsätzlicher Aufbau identisch mit dem Aufbau des in den Fig. 1 bis 6 gezeigten ersten Ausführungsbeispiels eines Ablagefaches ist. Von daher wird auf die Beschreibung der Fig. 1 bis 6 verwiesen. Im Unterschied zum ersten Ausführungsbeispiel der Fig. 1 - 6 ist in der Fig. 7 der Mattenboden 9 sowie die Auflagefläche 19 im unverformten Zustand nicht nach oben ausgewölbt, sondern vollflächig eben ausgeführt. Die freie Verformungskammer 31 ist zwischen dem Ablagefach-Boden 1 und dem Mattenboden 9 definiert. Im Unterschied zum vorangegangenen ersten Ausführungsbeispiel ist jedoch in der Fig. 7 die Materialdicke m im Mattenboden 9 nicht durchgängig konstant ausgelegt, sondern vielmehr variiert die Materialdicke m. Auf diese Weise werden auf der Unterseite des Mattenbodens 9 exemplarisch zwei voneinander durch einen Mittelsteg 37 getrennte taschenförmige Ausnehmungen 37 gebildet, die beide zusammen mit dem Ablagefach-Boden 1 eine zweiteilige freie Verformungskammer 31 definieren. Bei einer Druckbeaufschlagung F_{D} mittels der Fingerspitzen 33 des Fahrzeuginsassen erfolgt ebenfalls eine Wölbung W des Mattenbodens 9 in die freie Verformungskammer 31 hinein, wodurch eine im Ablagefach befindliche Münze in einfacher Weise von den Fingerspitzen 33 untergriffen werden kann.

Im Falle eines besonders schmalen Ablagefachs, also eines Ablagefach-Bodens 1 besonders geringer Breite, kann der in Fig. 7 gezeigte Mittelsteg 37 entfallen, da die Festigkeit der unter diesen Umständen ebenfalls entsprechend schmalen Einlegematte 7 dann ausreicht, um auch ohne einen Mittelsteg 37 und/oder eine Aufwölbung 25 der Einlegematte 7 bei üblichen Auflagebelastungen eine freie Verformungskammer 31 zwischen Ablagefach-Boden 1 und Mattenboden 9 aufrechtzuerhalten.

## Patentansprüche

1. Ablagefach für eine Innenverkleidung eines Fahrzeugs, mit einem Ablagefach-Boden (1), der an einem Inneneckbereich (3) in eine davon hochgezogene Seitenwandung (5) übergeht und der mit einer Einlegematte (7) ausgekleidet ist, die eine Auflagefläche (19) für zumindest einen kleinen Gegenstand (21), insbesondere Münzen, bildet, **dadurch gekennzeichnet, dass** die Einlegematte (7) zumindest teilweise zumindest eine freie Verformungskammer (31) begrenzt, und dass bei einer manuellen Druckbeaufschlagung (F_{D}), etwa mittels Fingerspitzen (33), auf die Auflagefläche (19) sich die Einlegematte (7) unter Wölbung (W) in die Verformungskammer (31) hinein verformt und zwischen der verformten Auflagefläche (19) und dem Gegenstand (21) ein für die Fingerspitzen (33) zugänglicher Hinterschnitt (35) zum Untergreifen des Gegenstands (21) gebildet wird.

2. Ablagefach nach Anspruch 1, **dadurch gekennzeichnet, dass** die freie Verformungskammer (31) zwischen der Einlegematte (7) und dem Ablagefach-Boden (1) ausgebildet ist.

3. Ablagefach nach Anspruch 1, **dadurch gekennzeichnet, dass** im unverformten Zustand die Einlegematte (7) unter Bildung der freien Verformungskammer (31) eine in die Entnahmerichtung (E) weisende Aufwölbung (25) aufweist.

4. Ablagefach nach Anspruch 1, **dadurch gekennzeichnet, dass** die Einlegematte (7) mit einem zumindest bereichsweise auf dem Ablagefach-Boden (1) liegenden Mattenboden (9) ausgebildet ist, der randseitig in einen Randsteg (13) übergeht, der im Inneneckbereich (3) des Ablagefachs konturangepasst ist und in formschlüssiger Anlage mit dem Ablagefach-Inneneckbereich (3) ist.

5. Ablagefach nach Anspruch 4, **dadurch gekennzeichnet, dass** zur Bildung der Aufwölbung (25) der Mattenboden (9) beginnend vom umfangsseitigen Randsteg (13) bis zu einer mittigen Scheitelstelle (S) in der Entnahmerichtung (E) kalottenförmig aufgewölbt ist.

6. Ablagefach nach Anspruch 1, **dadurch gekennzeichnet, dass** der Mattenboden (9) der Einlegematte (7) eine durchgängig konstante Materialdicke (m) aufweist.

7. Ablagefach nach Anspruch 1, **dadurch gekennzeichnet, dass** die Einlegematte (7) aus einer Kunststoff-Weichkomponente gefertigt ist, und dass das Ablagefach aus einer Kunststoff-Hartkomponente gefertigt ist.

8. Ablagefach nach Anspruch 1, **dadurch gekennzeichnet, dass** der Ablagefach-Boden (1) vollflächig eben ausgebildet ist.

9. Ablagefach nach Anspruch 1, **dadurch gekennzeichnet, dass** im unverformten Zustand die Auflagefläche (19) der Einlegematte (7) vollflächig eben ausgebildet ist.

10. Ablagefach nach Anspruch 1 oder 9, **dadurch gekennzeichnet, dass** der Mattenboden (9) der Einlegematte (7) zur Bildung der freien Verformungskammer (31) eine variierende Materialdicke (m) aufweist.

11. Ablagefach nach Anspruch 10, **dadurch gekennzeichnet, dass** der Mattenboden (9) der Einlegematte (7) zur Bildung der freien Verformungskammer (31) auf seiner dem Ablagefach-Boden (1) zugewandten Seite unter Reduzierung der Materialdicke (m) zumindest eine Ausnehmung (37) aufweist.

12. Ablagefach nach Anspruch 1, **dadurch gekennzeichnet, dass** die Ablagefläche (19) um einen Höhenversatz (Δz) von einer schmalen, schlitzförmigen Zugangsöffnung (27) beabstandet ist, die eine Breite (b) im Bereich von 25 bis 50 mm sowie eine Länge (l) im Bereich von 60 bis 100 mm aufweist.

13. Ablagefach nach Anspruch 12, **dadurch gekennzeichnet, dass** der Höhenversatz (Δz) zwischen der Zugangsöffnung (27) und der Ablagefläche (19) im Bereich von 50 bis 90 mm ist.

14. Ablagefach nach Anspruch 1, **dadurch gekennzeichnet, dass** die Einlegematte (7) elastisch nachgiebig unter Aufbau einer Rückstellkraft verformbar ist, und bei Wegfall der Druckbeaufschlagung (F_{D}) unter Abbau der Rückstellkraft selbsttätig wieder in ihren unverformten Zustand zurückkehrt.

15. Ablagefach nach Anspruch 1 oder 14, **dadurch gekennzeichnet, dass** die Einlegematte (7) aus einem Elastomermaterial gefertigt ist.

## Claims

1. Storage compartment for an interior trim of a vehicle, having a storage compartment bottom (1) which merges at an inner corner region (3) into a side wall (5) which is drawn upwards from it, and which storage compartment bottom (1) is trimmed with a liner mat (7) which forms a support surface (19) for at least one small object (21), in particular coins, **characterized in that** the liner mat (7) delimits at least one free deformation chamber (31) at least partially, and **in that**, in the case of manual pressure loading (F_{D}) of the support surface (19), for instance by means of fingertips (33), the liner mat (7) is deformed with bending (W) into the deformation chamber (31), and an undercut (35) which is accessible for the fingertips (33) for reaching below the object (21) is formed between the deformed support surface (19) and the object (21).

2. Storage compartment according to Claim 1, **characterized in that** the free deformation chamber (31) is configured between the liner mat (7) and the storage compartment bottom (1).

3. Storage compartment according to Claim 1, **characterized in that**, in the non-deformed state, the liner mat (7) has a bulge (25) which points in the removal direction (E) with the formation of the free deformation chamber (31).

4. Storage compartment according to Claim 1, **characterized in that** the liner mat (7) is configured with a mat bottom (9) which lies at least in regions on the storage compartment bottom (1), which merges at the edge into an edge web (13), is adapted in terms of contour in the inner corner region (3) of the storage compartment, and is in positively locking contact with the storage compartment inner corner region (3).

5. Storage compartment according to Claim 4, **characterized in that**, in order to form the bulge (25), the mat bottom (9) is bulged in a dome-shaped manner, starting from the circumferential edge web (13), in the removal direction (E) as far as a central vertex (S).

6. Storage compartment according to Claim 1, **characterized in that** the mat bottom (9) of the liner mat (7) has a universally constant material thickness (m).

7. Storage compartment according to Claim 1, **characterized in that** the liner mat (7) is manufactured from a soft plastic component, and **in that** the storage compartment is manufactured from a hard plastic component.

8. Storage compartment according to Claim 1, **characterized in that** the storage compartment bottom (1) is of planar configuration over the full surface area.

9. Storage compartment according to Claim 1, **characterized in that**, in the non-deformed state, the support surface (19) of the liner mat (7) is of planar configuration over the full surface area.

10. Storage compartment according to Claim 1 or 9, **characterized in that** the mat bottom (9) of the liner mat (7) has a varying material thickness (m) in order to form the free deformation chamber (31).

11. Storage compartment according to Claim 10, **characterized in that**, in order to form the free deformation chamber (31), the mat bottom (9) of the liner mat (7) has at least one recess (37) with a reduction of the material thickness (m) on its side which faces the storage compartment bottom (1).

12. Storage compartment according to Claim 1, **characterized in that** the support surface (19) is spaced apart by a vertical offset (Δz) from a narrow, slot-shaped access opening (27) which has a width (b) in the range from 25 to 50 mm and a length (1) in the range from 60 to 100 mm.

13. Storage compartment according to Claim 12, **characterized in that** the vertical offset (Δz) between the access opening (27) and the support surface (19) is in the range from 50 to 90 mm.

14. Storage compartment according to Claim 1, **characterized in that** the liner mat (7) can be deformed in an elastically resilient manner with the build-up of a restoring force and, in the case of cessation of the pressure loading (F_{D}), returns automatically into its non-deformed state again with dissipation of the restoring force.

15. Storage compartment according to Claim 1 or 14, **characterized in that** the liner mat (7) is manufactured from an elastomer material.

## Revendications

1. Compartiment de rangement pour une garniture intérieure d'un véhicule, avec un fond de compartiment de rangement (1), qui dans une région de coin intérieure (3) se poursuit en une paroi latérale (5) dressée à partir de celui-ci et qui est garni d'un tapis d'insertion (7), qui forme une face de dépôt (19) pour au moins un petit objet (21), en particulier des pièces de monnaie, **caractérisé en ce que** le tapis d'insertion (7) limite au moins en partie au moins une chambre de déformation libre (31), et **en ce que**, lors d'une pression exercée manuellement (F_{D}), par exemple au moyen du bout des doigts (33), sur la face de dépôt (19), le tapis d'insertion (7) se déforme par bombage (W) vers l'intérieur de la chambre de déformation (31) et il se forme entre la face de dépôt déformée (19) et l'objet (21) une contre-dépouille (35) accessible pour les bouts de doigts (33) afin de saisir l'objet (21).

2. Compartiment de rangement selon la revendication 1, **caractérisé en ce que** la chambre de déformation libre (31) est formée entre le tapis d'insertion (7) et le fond de compartiment de rangement (1).

3. Compartiment de rangement selon la revendication 1, **caractérisé en ce qu'**à l'état non déformé le tapis d'insertion (7) présente un bombage (25) orienté dans la direction d'enlèvement (E) avec formation de la chambre de déformation libre (31).

4. Compartiment de rangement selon la revendication 1, **caractérisé en ce que** le tapis d'insertion (7) est formé avec un fond de tapis (9) posé au moins localement sur le fond de compartiment de rangement (1), qui se poursuit en bordure en une nervure de bordure (13), qui présente un contour adapté dans la région de coin intérieure (3) du compartiment de rangement et qui est en appui emboîté avec la région de coin intérieure (3) du compartiment de rangement.

5. Compartiment de rangement selon la revendication 4, **caractérisé en ce que** le fond de tapis (9) est bombé en forme de calotte à partir de la nervure de bordure périphérique (13) jusqu'à un point culminant central (S) dans la direction d'enlèvement (E) pour la formation du bombage (25).

6. Compartiment de rangement selon la revendication 1, **caractérisé en ce que** le fond de tapis (9) du tapis d'insertion (7) présente une épaisseur de matière (m) généralement constante.

7. Compartiment de rangement selon la revendication 1, **caractérisé en ce que** le tapis d'insertion (7) est fabriqué en un composant souple en matière plastique, et **en ce que** le compartiment de rangement est fabriqué en un composant dur en matière plastique.

8. Compartiment de rangement selon la revendication 1, **caractérisé en ce que** le fond de compartiment de rangement (1) est de forme entièrement plane.

9. Compartiment de rangement selon la revendication 1, **caractérisé en ce que** dans l'état non déformé la face de dépôt (19) du tapis d'insertion (7) est de forme entièrement plane.

10. Compartiment de rangement selon la revendication 1 ou 9, **caractérisé en ce que** le fond de tapis (9) du tapis d'insertion (7) présente une épaisseur de matière variable (m) pour la formation de la chambre de déformation libre (31).

11. Compartiment de rangement selon la revendication 10, **caractérisé en ce que** le fond de tapis (9) du tapis d'insertion (7) présente, pour la formation de la chambre de déformation libre (31), au moins un évidement (37) sur son côté tourné vers le fond de compartiment de rangement (1) avec réduction de l'épaisseur de matière (m).

12. Compartiment de rangement selon la revendication 1, **caractérisé en ce que** la face de dépôt (19) est distante d'un décalage vertical (Δz) d'une ouverture d'accès étroite en forme de fente (27), qui présente une largeur (b) dans la plage de 25 à 50 mm ainsi qu'une longueur (l) dans la plage de 60 à 100 mm.

13. Compartiment de rangement selon la revendication 12, **caractérisé en ce que** le décalage vertical (Δz) entre l'ouverture d'accès (27) et la face de dépôt (19) se situe dans la plage de 50 à 90 mm.

14. Compartiment de rangement selon la revendication 1, **caractérisé en ce que** le tapis d'insertion (7) est déformable élastiquement avec création d'une force de rappel, et lors de la suppression de la pression exercée (F_{D}) revient de nouveau automatiquement dans son état non déformé avec disparition de la force de rappel.

15. Compartiment de rangement selon la revendication 1 ou 14, **caractérisé en ce que** le tapis d'insertion (7) est fabriqué en un matériau élastomère.
